# EUROPÄISCHE PATENTSCHRIFT

(11) **EP 0 504 951 B1**
(45) Veröffentlichungstag und Bekanntmachung des Hinweises auf die Patenterteilung: **06.12.1995**
(21) Anmeldenummer: 92109951.1
(22) Anmeldetag: 29.03.1990
(51) Int. Cl.: F16C 29/06, F16C 33/76

(54) **Verfahren zum Einbau einer Längsdichtungsleiste in eine Linearkugelbüchse und Längsdichtungsleiste zur Durchführung dieses Verfahrens**
Method for mounting a longitudinal sealing strip in a linear ball bearing and longitudinal sealing strip for carrying out the method
Procédé pour le montage d'une bande d'étanchéité longitudinale dans un palier linéaire à billes et bande d'étanchéité longitudinale pour la mise en oeuvre du procédé

(30) Priorität: 31.03.1989 DE 3910457
(43) Veröffentlichungstag der Anmeldung: 23.09.1992
(62) Teilanmeldung aus: 90106047.5
(73) Patentinhaber: Deutsche Star GmbH, 97424 Schweinfurt (DE)
(72) Erfinder: Albert, Ernst, W-8729 Sand/Main (DE); Dütsch, German, W-8720 Schweinfurt (DE); Höfling, Rainer, W-8725 Arnstein (DE)
(74) Vertreter: Weickmann, Heinrich, Dipl.-Ing.

(56) Entgegenhaltungen:
- EP-A- 0 318 980
- US-A- 4 005 913

## Beschreibung

Die Erfindung betrifft ein Verfahren zum Einbau einer Längsdichtungsleiste in eine mit Längsspalt ausgeführte, eine Längsführungswelle mit Stützteil nur teilweise umfassende Linearkugelbüchse mit käfiggeführten endlosen Kugelschleifen, bei dem die Längsdichtungsleiste an der Linearkugelbüchse so befestigt wird, daß sie an der Längsführungswelle in deren Längsrichtung dichtend anliegt, sowie eine Längsdichtungsleiste zur Durchführung des Verfahrens.

Aus der DE-OS 35 12 858 ist sowohl ein gattunggemäßes Verfahren als auch eine gattungsgemäße Längsdichtungsleiste bekannt. Dieses Dokument zeigt nämlich ein Linearkugellager, die beispielsweise zur Schlittenführung im Werkzeugmaschinenbau geeignet ist, mit einem geschlitzten Lagerblock, welcher durch eine Mehrzahl von käfiggeführten, an dem Lagerblock abrollenden Endloskugelschleifen auf einer Führungsfläche einer Welle abgestützt ist, die ihrerseits im Bereich der Führungsstrecke durch den Schlitz durchdringende Stützmittel auf einer Basis abgestützt ist. Der Schlitz ist regelmäßig durch die Stützmittel, auch wenn diese als schlitzangepaßte Profile ausgebildet sind, nicht vollständig ausgefüllt, so daß die Möglichkeit des Entweichens von Schmiermitteln und des Eindringens von Schmutz, z.B. von Metallbearbeitungsspänen in den Kugelbereich, besteht. Aus diesem Grund sind in der DE-OS 35 12 858 neben Teilringdichtungen an den Enden des Lagerblocks auch schon Längsdichtungsleisten vorgesehen, die längs der Schlitzbegrenzungsflächen des Lagerblocks angebracht werden und zur längsbeweglichen Anlage an der Führungsfläche bestimmt sind. Die Längsdichtungsleisten sind dabei an dem Lagerblock angeklebt, in Nuten eingelegt oder durch Ultraschallverschweißung befestigt. Sie dienen dem Zwecke, den Austritt von Schmiermitteln aus dem Bereich der Kugelschleifen zu verhindern und den Eintritt von Schmutz zu den Kugelschleifen zu unterbinden. Sie sind aus Kunststoff oder elastomerem Werkstoff hergestellt.

Die Befestigung dieser Längsdichtungsleisten nach den bekannten Befestigungsverfahren ist schwierig. Dabei ist zu bedenken, daß diese Längsdichtungsleisten einen sehr geringen Querschnitt haben, insbesondere bei Linearkugelführungen von geringem Querschnitt.

Der Erfindung liegt deshalb die Aufgabe zugrunde, eine Methode anzugeben, um solche Längsdichtungsleisten vereinfacht in einer Linearkugelbüchse einbauen zu können.

Zur Lösung dieser Aufgabe wird erfindungsgemäß vorgeschlagen, daß die an ihren Enden mit Vorsprüngen ausgeführte Längsdichtungsleiste unter Längsspannung gesetzt und mit den Vorsprüngen an Stützschultern der Linearkugelbüchse unter Erhaltung einer Vorspannung zur Anlage gebracht wird.

Die erfindungsgemäße Methode der Befestigung ist insbesondere dann von erheblichem Vorteil, wenn die Längsdichtungsleisten aus einem gummi-elastischen Material bestehen. Ein solches gummi-elastisches Material ist für die Dichtwirkung von erheblichem Vorteil, da es sich eng an die jeweilige Führungsfläche anschmiegt, auch wenn Fluchtungsfehler auftreten. Andererseits besteht bei einem gummi-elastischen Material, insbesondere dann, wenn dieses in Form dünner Dichtungsleisten eingebaut wird, das Problem, daß die Dichtungsleisten bei Längsbewegungen des Lagerblocks gegenüber der Welle unter Faltenbildung verformt werden könnten.

Durch die nach dem erfindungsgemäßen Verfahren erzeugte Vorspannung in den Längsdichtungsleisten wird dieser Gefahr vorgebeugt. Weiterhin wird durch das erfindungsgemäße Verfahren der Einbau erleichtert, weil im Gegensatz zu den bekannten Verfahren keine aufwendigen Methoden, etwa des Anklebens oder Ultraschallschweißens, angewandt werden müssen und im ersteren Fall insbesondere die Gefahr eines Eindringens von Klebstoff in den Kugelbereich ausgeschlossen ist.

Um den Einbau der Längsdichtungsleisten weiter zu vereinfachen, wird vorgeschlagen, daß die Längsdichtungsleiste zur Aufbringung der Längsspannung außerhalb der Vorsprünge mit Griffelementen versehen wird.

Sollten diese Griffelemente am fertigen Produkt stören, so ist es möglich, daß die Griffelemente nach Einbau der Längsdichtungsleiste abgetrennt werden.

Die Vorsprünge können beispielsweise an Stützschultern angrenzend an eine axial gerichtete Begrenzungsfläche einer eine Teilringdichtung aufnehmenden Teilringnut des Käfigs bereitgestellt werden.

Auf diese Weise wird eine vollständige Abdichtung der die Kugelschleifen aufnehmenden Räume ermöglicht, indem die Längsdichtungsleisten an die jeweilige Teilringdichtung angenähert werden. Dies kann insbesondere in der Weise geschehen, daß eine Längsdichtungsleiste verwendet wird, welche über den jeweiligen Vorsprung hinaus fortgesetzte Fortsätze besitzt und daß diese Fortsätze so angebracht werden, daß sie in die Teilringnut hineinragen und die jeweilige Teilringdichtung mit peripher gerichteten Endflächen jeweils an einem Fortsatz anliegt.

Zur Anwendung kommen bevorzugt Längsdichtungsleisten mit einem Wurzelteil und einem Zungenteil, wobei der Wurzelteil in einer Längsnut des Käfigs aufgenommen wird und der Zungenteil zur Anlage an der Führungswelle bestimmt ist.

Zur anpassung der Längsdichtungsleisten an Fluchtabweichungen empfiehlt es sich, dass der Wurzelteil in der jeweiligen Längsnut radial bezüglich der Käfigachse beweglich ist.

Die Erfindung betrifft weiter zur Durchführung des erfindungsgemäßen Verfahrens eine Längsdichtungsleiste, welche an ihren Enden jeweils außerhalb der Vorsprünge Griffelemente aufweist, welche nach erfolgtem Einbau der Längsdichtungsleiste an die Linearkugelbüchse abtrennbar sind.

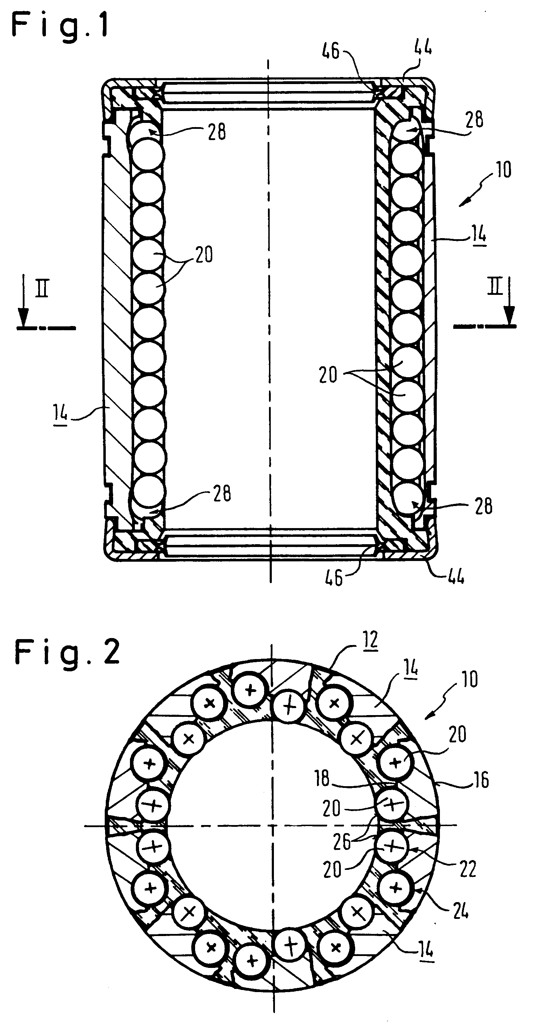

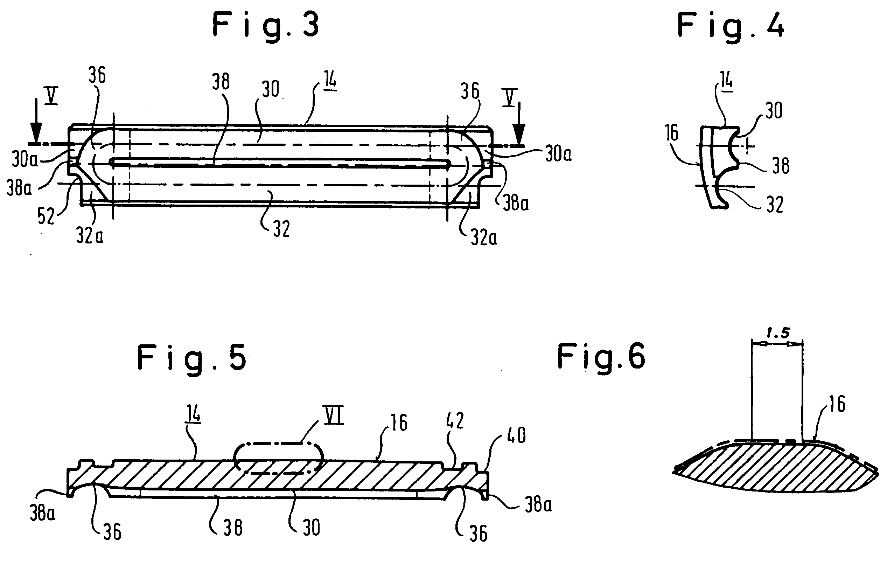

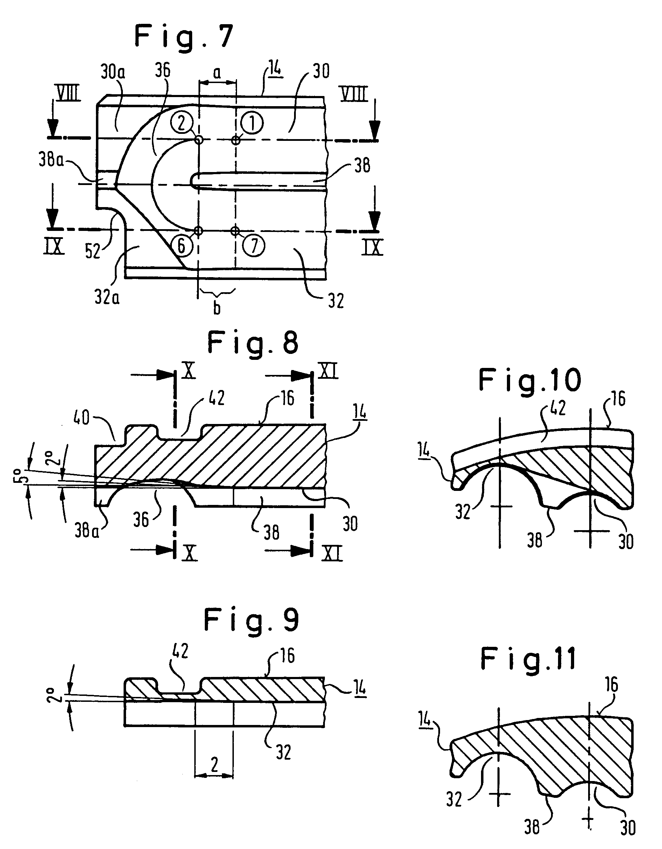

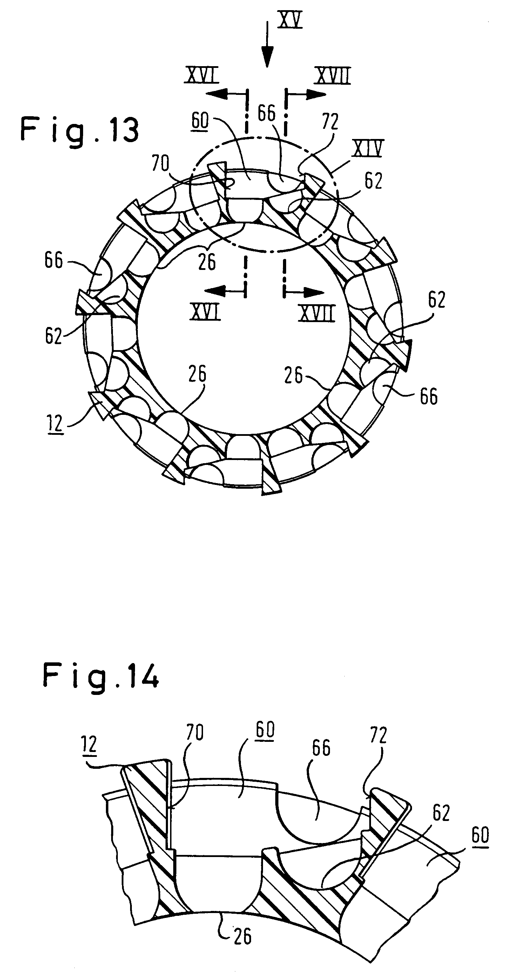

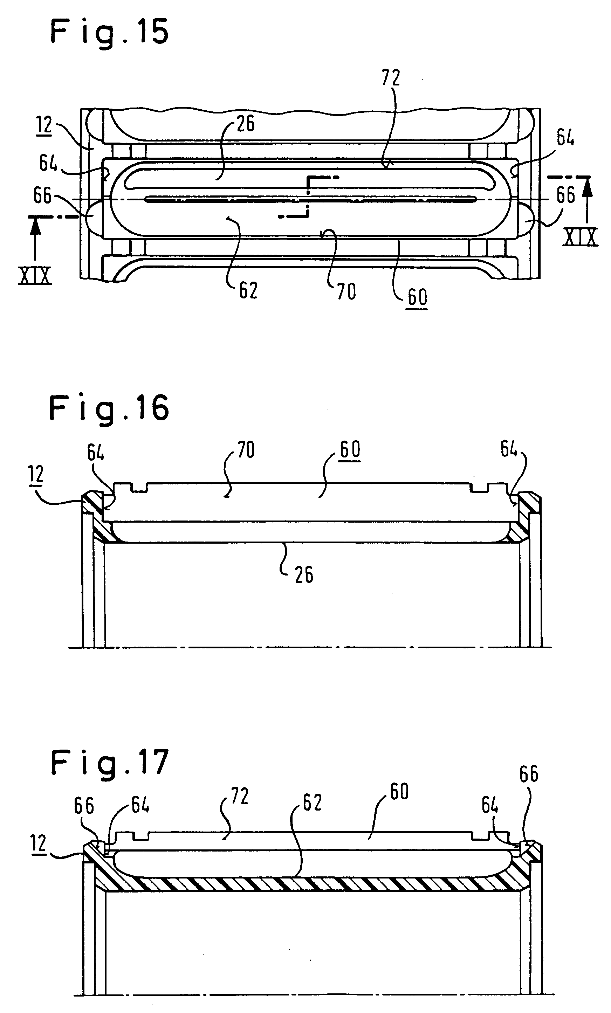

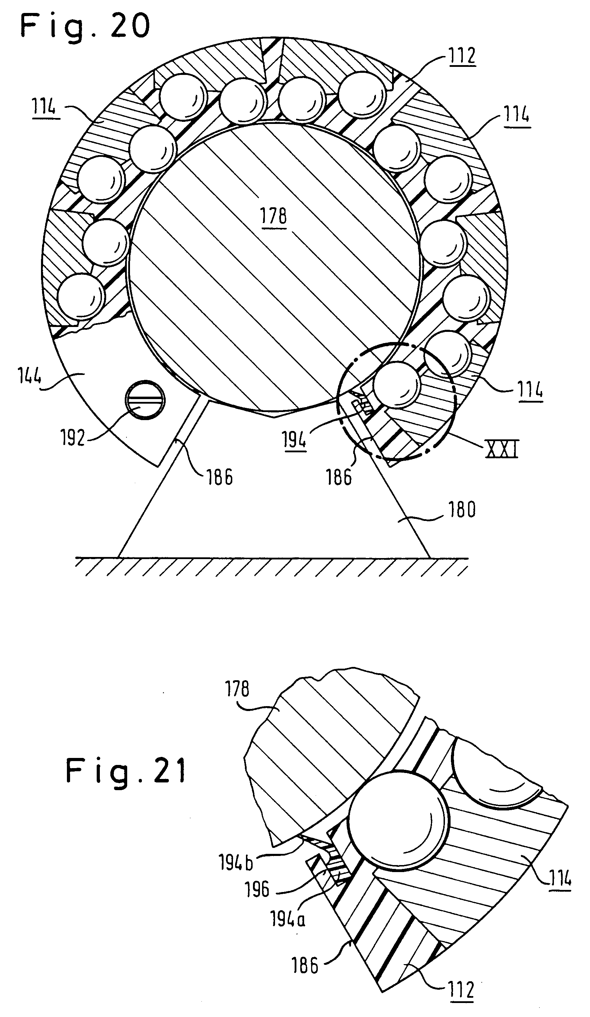

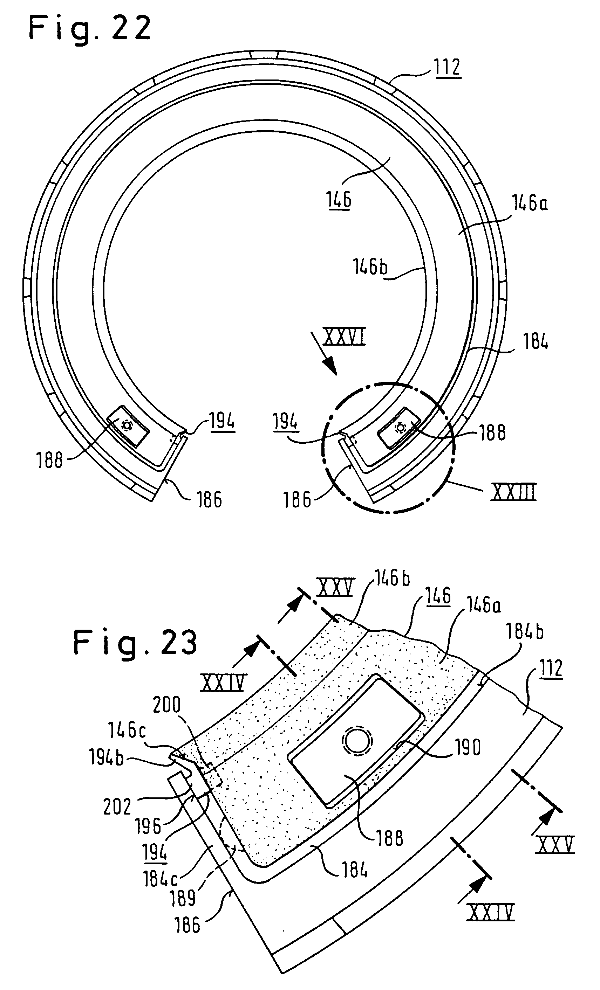

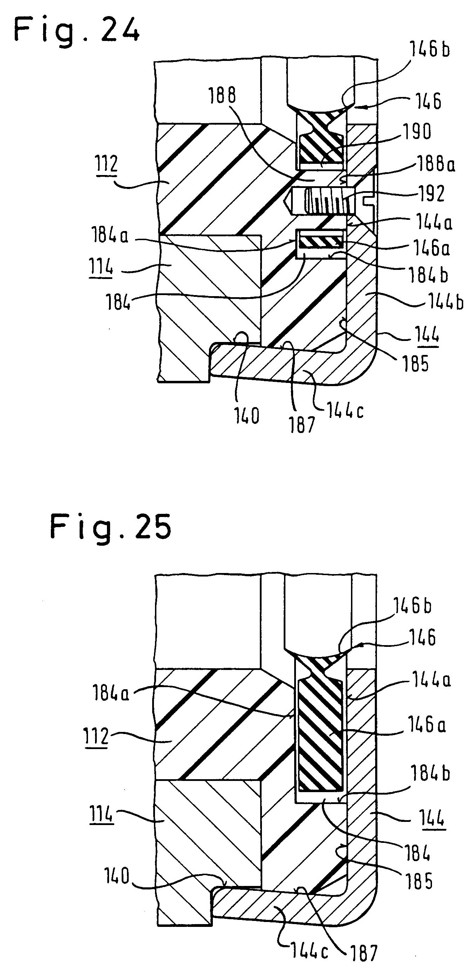

Die beiliegenden Figuren erläutern die Erfindung anhand eines Ausführungsbeispiels. Es stellen dar:
zur Darstellung des technischen Gesamtzusammenhangs
Figur 1
   einen Längsschnitt durch eine erfindingsgemässe Linearkugelbüchse;
Figur 2
   einen Querschnitt nach Linie II - II der Figur 1;
Figur 3
   eine Ansicht der Innenseite einer Laufplatte;
Figur 4
   eine Endansicht einer Laufplatte gemäss Figur 3;
Figur 5
   einen Schnitt nach Linie V - V der Figur 3;
Figur 6
   eine Vergrösserung des Bereichs VI der Figur 5 in einem Schnitt entsprechend demjenigen der Figur 5;
Figur 7
   eine Vergrösserung eines Endabschnitts der Laufplatte gemäss Figur 3;
Figur 8
   einen Schnitt nach Linie VIII - VIII der Figur 7;
Figur 9
   einen Schnitt nach Linie IX - IX der Figur 7;
Figur 10
   einen Schnitt nach Linie X - X der Figur 8;
Figur 11
   einen Schnitt nach Linie XI - XI der Figur 8;
Figur 12
   einen Niveauplan mit tabellarischer Erfassung der Sohlenniveaus der Laufbahn in einem Endabschnitt der Laufplatte gemäss Figur 7;
Figur 13
   einen Querschnitt durch einen Käfig entlang Linie II - II der Figur 1, jedoch nach Entfernung der Laufplatten und Kugeln;
Figur 14
   ein Detail zu Figur 13 in Vergrösserung;
Figur 15
   eine Teilansicht des Käfigs in Pfeilrichtung XV der Figur 13;
Figur 16
   einen Längsschnitt durch den Käfig nach Linie XVI - XVI der Figur 13;
Figur 17
   einen Längsschnitt nach Linie XVII - XVII der Figur 13;
Figur 18
   eine Teilansicht einer Laufplatte entsprechend Figur 7, jedoch mit einer Endabschrägung;
Figur 19
   einen Schnitt nach Linie XIX - XIX der Figur 15 beim Einfüllen von Kugeln; zur Darstellung der eigentlichen Erfindung
Figur 20
   einen Schnitt durch ein Linearkugellager gemäss Figur 1, jedoch insofern abgewandelt, als der Käfig zur Aufnahme einer Unterstützung für die Welle teilringförmig ausgebildet ist;
Figur 21
   ein Detail entsprechend der Stelle XXI der Figur 20 in Vergrösserung;
Figur 22
   eine Endansicht eines Linearkugellagers gemäss Figur 20, wobei ein ebenfalls teilringförmiger , topfringförmiger Endring abgenommen ist;
Figur 23
   eine Vergrösserung des Details XXIII der Figur 22;
Figur 24
   einen Schnitt nach Linie XXIV - XXIV der Figur 23;
Figur 25
   einen Schnitt nach Linie XXV - XXV der Figur 23;

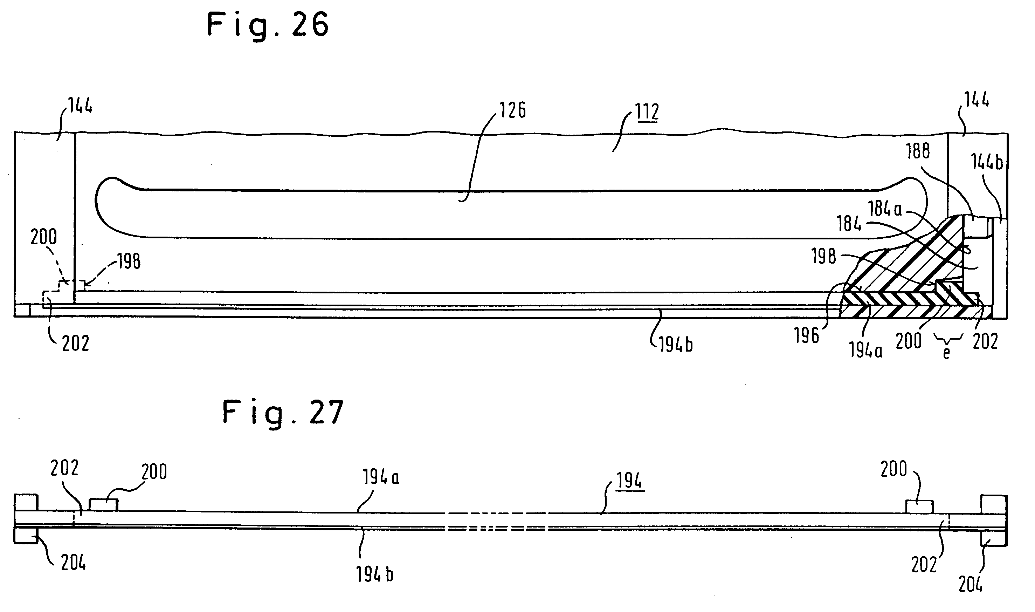

Figur 26 eine Teilansicht in Richtung des Pfeiles XXVI der Figur 22,
   teilweise geschnitten;
Figur 27
   eine Längsdichtungsleiste als Detail zur Figur 26 und
Figur 28
   eine Darstellung der Laufplatte entsprechend Figur 6.

In Figur 1 und 2 ist eine Linearkugelbüchse ganz allgemein mit 10 bezeichnet. Sie umfaßt einen Käfig 12 aus hartelastischem Kunststoff. In diesen Käfig 12 sind Laufplatten 14 eingesetzt, welche jeweils eine Außenumfangsfläche 16 zur Anlage an einer die Linearkugelbüchse 10 aufnehmenden Lagergehäusebohrung und eine Innenumfangsfläche 18 besitzen. Die Laufplatten 14 bestehen aus einem harten Werkstoff, insbesondere gehärtetem Stahl. Durch den Käfig 12 und die Laufplatten 14 ist jeweils eine Führung für einen Kugelumlauf gebildet. Die Kugeln sind mit 20 bezeichnet. Jeder Kugelumlauf bildet eine Tragkugelreihe 22 und eine Rücklaufkugelreihe 24. Die Tragkugelreihen 22 ragen durch Schlitze 26 des Käfigs 12 hindurch nach radial innen zur Anlage an einer nicht dargestellten Welle. Die Rücklaufkugelreihen 24 sind nach radial innen durch den Käfig 12 gestützt. Beide Geradkugelreihen 22 und 24 liegen an der Innenumfangsfläche 18 der jeweiligen Laufplatte 14 an. Die Tragkugelreihe 22 und die Rücklaufkugelreihe 24 sind jeweils durch Bogenkugelreihen 28 verbunden.
Die Laufplatten 14 sind in dem Käfig 12 formschlüssig gehalten, jedoch mit einem gewissen Bewegungsspiel.

In Figuren 3, 4 und 5 ist eine Laufplatte 14 im einzelnen dargestellt. Diese Laufplatte 14 ist auf der Basis eines Profilstabs hergestellt, dessen Profil aus Figur 4 ersichtlich ist. Die Laufplatte 14 weist einen tragenden Geradlaufbahnabschnitt 30 auf, welcher gegenüber der Außenumfangsfläche 16 ein erstes höheres Niveau besitzt und einen rückführenden Geradlaufbahnabschnitt 32, welcher gegenüber der Außenumfangsfläche 16 ein niedrigeres Niveau besitzt.
Der tragende Laufbahnabschnitt 30 dient zur Aufnahme der Tragkugelreihe 22 und der Geradlaufbahnabschnitt 32 zur Aufnahme der Rücklaufkugelreihe 24. Die beiden Geradlaufbahnabschnitte 30 und 32 sind durch Bogenlaufbahnabschnitte 36 miteinander verbunden. Die Geradlaufbahnabschnitte 30 und 32 erstrecken sich jedoch mit den Endabschnitten 30a bzw. 32a im wesentlichen profilkonstant bis an die Enden der Laufplatte 14. Zwischen den Geradlaufbahnabschnitten 30 und 32 liegt eine Mittelrippe 38. Die Mittelrippe 38 setzt sich mit Endabschnitten 38a bis an die Enden der Laufplatte 14 profilkonstant fort und ist durch die Bogenlaufbahnabschnitte 36 lediglich unterbrochen. An ihrer Aussenumfangsfläche 16 ist die Laufbahnplatte, wie in Figur 6 dargestellt, gekrümmt, so daß sie schaukelnd an der Innenumfangsfläche einer Lagergehäusebohrung zur Anlage kommt. Wie aus Figur 4 ersichtlich sind die Geradlaufbahnabschnitte 30 und 32 gerundet mit einem Krümmungsradius, der gleich oder wenig größer ist als der Radius der Kugeln 20.

In Figur 5 erkennt man an den Enden der Laufplatte Ausdrehungen 40 und 42. Die Ausdrehungen 40 sind zur Aufnahme von topfförmigen Endringen 44 (Figur 1) bestimmt, welche die Laufplatte 14 und Abschlußscheiben 46 am Käfig 12 sichern. Die Eindrehungen 42 sind dazu bestimmt, Sicherungsringe zur axialen Sicherung der Kugelbüchse einer Aufnahmebohrung aufzunehmen.

Nähere Einzelheiten über die Ausbildung der Laufbahnen ergeben sich aus den Figuren 7 bis 11.
Die Bogenlaufbahnabschnitte 36 erstrecken sich über annähernd 180° und sind annähernd kreisförmig gekrümmt. Der Niveauabfall von dem Geradlaufbahnabschnitt 30 zu dem Geradlaufbahnabschnitt 32 beginnt bereits in einem Endabschnitt a des Geradlaufbahnabschnitts 30. Dadurch liegt die Sohle des Bogenlaufbahnabschnitts 36 im Bereich der Verschneidung mit dem Geradlaufbahnabschnitt 30 tiefer als eine gedachte Fortsetzung der Sohle des Geradlaufbahnabschnitts 30,und eine Seitenführung der Kugeln ist auch in diesem Verschneidungsbereich gewährleistet. Das Niveaugefälle im Endabschnitt a ist durch die Winkelangabe 2° in Figur 8 dargestellt. Das Niveaugefälle im unmittelbar anschließenden Bereich des Bogenlaufbahnabschnitts 36 beträgt, wie in Figur 8 ebenfalls dargestellt, ca. 5°. Es treten keine Niveausprünge auf. Die Gefällsüberänge sind abgerundet. Die Längsausdehnung des Endabschnitts a ist auch nach dem Schleifen so groß, daß die belasteten Kugeln vor Einlauf in den Bogenlaufbahnabschnitt 36 kontinuierlich entlastet werden können. Dies gilt analog auch für die in die Lastzone eintretenden Kugeln. Durch diese Maßnahme ist ein gleichmäßiger und ruckfreier Ablauf gewährleistet. An der Stelle ⑥ in Figur 7 besitzt die Bogenlaufbahn 36 ein Niveauminimum, welches unter dem Niveau der rückführenden Geradlaufbahn 32 liegt. Im Endabschnitt b des rückführenden Geradlaufbahnabschnitts 32 findet ein langsamer Niveauanstieg statt. Es treten keine Niveausprünge auf. Die Gefällsübergänge sind verrundet. Das Niveauminimum ⑥ ist auch nach dem Schleifen des rückführenden Geradlaufbahnabschnitts 32 noch vorhanden. Die Gefällsstrecken a und b der Geradlaufbahnabschnitte 30, 32 sind zusammen mit den Bogenlaufbahnabschnitten 36 geprägt. Die Verjüngung der Rippenbreite der Mittelrippe 38 im Bereich der Endabschnitte a und b ergibt einen trichterförmigen Übergang des Bogenlaufbahnabschnitts 36 in die Geradlaufbahnabschnitte 30 und 32.

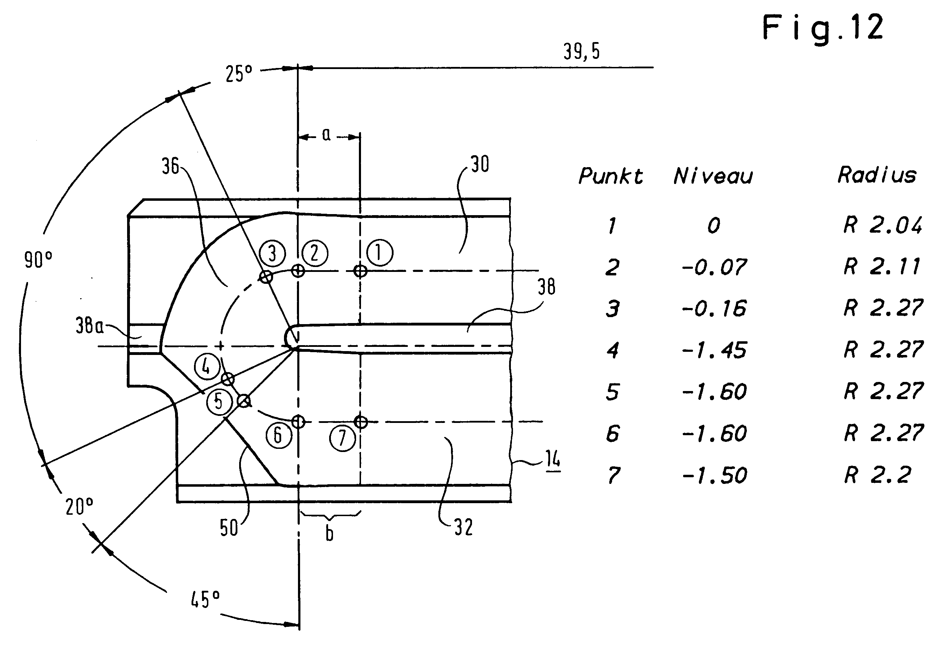

In Figur 12 sind mit ① bis ⑦ verschiedene Meßpunkte bezeichnet, die teilweise auch in Figur 7 eingetragen wurden, um die Relationen zwischen Figur 7 und 12 klar zu machen. Diesen Meßpunkten sind nach der Tabelle der Figur 12 verschiedene Niveauwerte beispielshalber zugeordnet. Die Niveauwerte bezeichnen die relative Niveauhöhe in Millimeter jeweils auf der Sohle der Laufbahn gegenüber dem Sohlenniveau des tragenden Laufbahnabschnitts 30, welches mit Null bewertet ist.

Man erkennt aus der zweiten Spalte der Tabelle ohne weiteres, daß im Bereich ⑤ bis ⑥ ein Niveauminimum vorliegt, und daß von diesem Niveauminimum aus ein Anstieg des Niveaus bis auf die Niveauhöhe der Sohle des rückführenden Geradlaufbahnabschnitts 32 Stattfindet. Der Wiederanstieg ⑥ bis ⑦ liegt im Wesentlichen in der Rücklaufgeraden des rückführenden Geradlaufbahnabschnitts 32. Den einzelnen Punkten ① bis ⑦ zugeordneten Ortskoordinaten sind durch die Winkelwerte in der Figur 12 bezeichnet. Die Figur 12 vermittelt durch die Längenangabe 39,5 mm auch eine Größenordnungsvorstellung von der Länge der Kugelbüchse. Ergänzend hierzu sei bemerkt, daß der Außendurchmesser des Käfigs 12 im Beispielsfall 40 mm beträgt, daß insgesamt 10 Laufplatten vorgesehen sind, wie in Figur 2 dargestellt, daß die periphere Erstreckung einer Laufplatte 9,7 mm beträgt, und daß der Kugeldurchmesser 3,969 mm beträgt. Schließlich beträgt der Krümmungsradius der Laufbahn an der Sohle gemessen (strichpunktierte Linie in Figur 12) 2,04 mm. In der Tabelle sind schließlich in der vierten Spalte die jeweiligen Radien der Laufbahnabschnitte in Millimetern aufgezeichnet. Man erkennt, daß diese Radien wenig größer sind als der Kugelradius, so daß die Kugeln seitlich geführt sind. Aus der Figur 12 und der Tabelle erkennt man, daß im Bereich ① bis ④ eine Seitenführung gewährleistet ist; diese Seitenführung ist im Scheitelbereich ④ durch den Fortsatz 38a der Rippe 38 ergänzt. Auch in dem relativ unkritischen Bereich ④ bis ⑦ ist noch eine gewisse Seitenführung der Kugeln durch die Laufplatte gewährleistet, wie durch die Verschneidungslinie 50 angedeutet. Es sei noch einmal erwähnt, daß die einzelnen Gefällsstrecken von ① bis ⑦ im wesentlichen stetig ineinander übergehen.

Die Führung der Kugeln ist durch den Käfig 12 ergänzt. Die Führungsflächen in dem Käfig 12 sind mit hoher Präzision so gefertigt, daß sie an die Führungsflächen der Laufplatten versatzlos anschliessen.

Die in den Figuren 3 und 7 erkennbaren Aussparungen 52 dienen zum Teil der Materialaufnahme beim Prägen der Bogenlaufbahnabschnitte 36; anders ausgedrückt: Beim Prägen werden die Laufplatten 14 mit vorher gebildeten Aussparungen in Prägeformen eingelegt, welche der Außenumfangsfläche 16 und den Endflächen anliegen, jedoch im Bereich der Aussparungen 52 so viel Luft lassen, daß das beim Prägen verdrängte Material einfließen kann und dabei die Geometrie der Aussparungen gemäß Figur 7 entsteht.

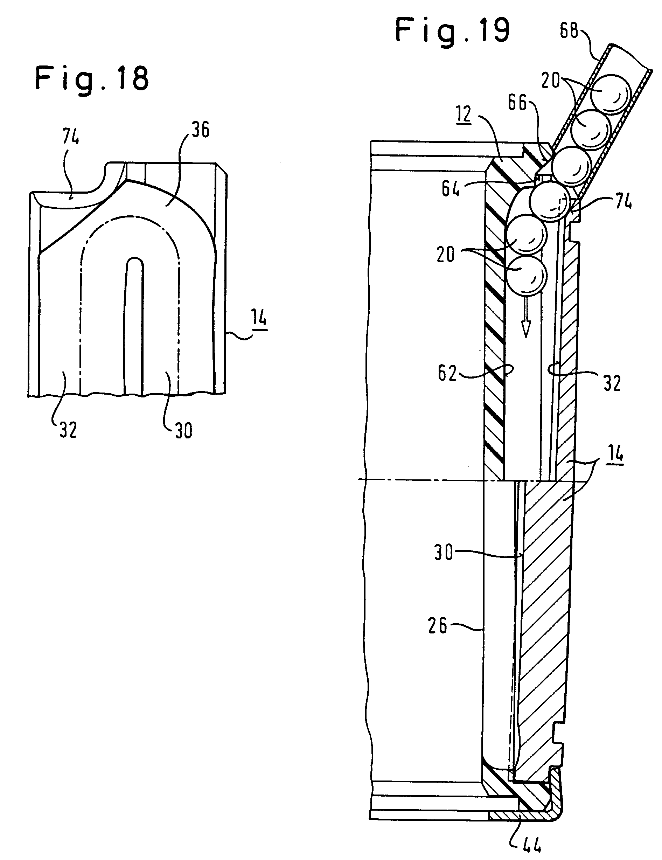

In Figur 13 ist der Käfig gemäss Figur 2 nach Entnahme der Laufplatten 14 und der Kugeln 20 dargestellt. Man erkennt dort die Ausnehmungen 60 für die Aufnahme der Laufplatten 14 der Figur 2. Man erkennt weiter die Schlitze 26, welche den Kugeln der Tragkugelreihe (22) teilweisen Durchtritt gewähren und man erkennt die Laufbahn 62 für die Rücklaufkugelreihe 24 der Figur 2. Dies alles ist in Vergrösserung auch in Figur 14 dargestellt. Man erkennt weiter aus den Figuren 14 und 15, dass an den Enden der Ausnehmungen 60, und zwar angrenzend an die Endflächen 64 der Ausnehmungen 60 in Flucht mit den Laufbahnen 62 rinnenförmige Füllschrägen 66 angeordnet sind, deren Bedeutung insbesondere aus Figur 19 zu ersehen ist. Dort wird zum Einfüllen der Kugeln 20 eines Kugelumlaufs ein Füllrohr 68 angesetzt, so dass es annähernd in Fortsetzung der jeweiligen Füllschräge 66 steht. Dabei ist der obere topfförmige Endring 44 abgenommen, während der untere topfförmige Endring 44 seine Sicherungsposition bezüglich der Laufplatten 14 einnimmt. Da der obere Endring 44 fehlt, kann die Laufplatte 14, wie aus Figur 19 zu ersehen, schräggestellt werden, so dass sie im Bereich der Einlaufschräge 66 den Kugeln 20 Einlass gewährt. Das Schrägstellen der Laufplatten 14 ist möglich, da die Längsbegrenzungsflächen 70, 72 der Ausnehmung 60 annähernd zueinander parallel sind, oder aber das Kunststoffmaterial des Käfigs 12 derart elastisch ist, dass ein Ausstellen der Laufplatte 14 unter Zwang möglich ist.

Das Einfüllen der Kugeln 20 in die Laufbahn 62 der Rücklaufkugelreihe wird noch dadurch erleichtert, dass an der Innenseite der Laufplatte 14, wie aus Figuren 18 und 19 ersichtlich, eine Abschrägung 74 angebracht ist.

Es ist zu bemerken, dass die Art des Einfüllens unter Verwendung der Einfüllschräge 66 und der Abschrägung 74 nicht daran gebunden ist, das an der Laufplatte 14 die beiden Geradlaufbahnabschnitte 30,32 und die Bogenlaufbahnabschnitte 36 angebracht sind. Die Art des Einfüllens wäre vielmehr auch dann denkbar, wenn die Laufplatten 14 auf die Breite der Geradlaufbahnabschnitte 30 der Tragkugelreihen beschränkt wären. In diesem Fall müßten nur die Einfüllschrägen 66 und die Abschrägungen 74 in Flucht mit dem jeweiligen Geradlaufbahnabschnitt 30 einer tragenden Kugelreihe angebracht werden.

In Figur 20 erkennt man ein Linearkugellager, bei dem die Welle 178 durch Ständer 180 unterstützt und der Käfig 112 teilringförmig ausgebildet ist. Der Käfig ist an seinen Enden wieder mit Endringen 144 versehen, welche entsprechend der Umfangserstreckung des Käfigs 112 teilringförmig ausgebildet sind. Zur Verhinderung des Eindringens von Schmutz in den Bereich der Kugeln sind Dichtungen vorgesehen.

In Figur 1 war auf die Abschlußscheiben 46 hingewiesen worden. Dies sind dort die notwendigen Ringdichtungen, die am Käfig durch Endringe 44 gehalten sind und mit einer Dichtlippe an der dort nicht eingezeichneten Welle zur Anlage kommen. Dieser Dichtringe bedarf es auch bei der nunmehr diskutierten Ausführungsform nach Figur 20, und man erkennt diese Dichtringe in den Figuren 22 bis 25, wo sie mit 146 bezeichnet sind und sich zusammensetzen aus einem jeweiligen Grundkörper 146a und einer Dichtlippe 146b. Die Dichtlippe 146b ist auch hier wieder zur Anlage an der Welle 178 der Figur 20 bestimmt. Der Grundkörper 146a des Dichtrings 146 ist dabei, wie insbesondere aus Figuren 23, 24 und 25 zu ersehen, in einer Ringausnehmung 184 einer Endfläche 185 des Käfigs 112 aufgenommen, welche durch eine axial gerichtete Fläche 184a und eine radial einwärts gerichtete Fläche 184b definiert und an ihren Enden durch Endleisten 184c begrenzt ist. Der Grundkörper 146a liegt mit axialem Spiel zwischen der axial gerichteten Fläche 184a des Käfigs 112 und einer axial gerichteten Fläche 144a des auf der Endfläche 185 aufliegenden Endrings 144. Das Übermaß der Ausnehmung 184 gegenüber dem Durchmesser des Grundkörpers 146a (Figur 25) gewährt dem Grundkörper 146a radiales Spiel innerhalb der Ausnehmung 184. Dieses radiale Spiel besteht auch bei der Ausführungsform nach Figur 1, ist auch dort von wesentlicher Bedeutung,ist aber dort bisher nicht erwähnt worden. Das radiale Spiel ist notwendig, um bei einer Winkelverstellung der Welle 178 gegenüber dem Käfig 112 eine Anpassung des Dichtungsrings 146 an die veränderte Geometrie zu ermöglichen. Während nun bei der Ausführungsform nach den Figuren 1 bis 13 der Dichtungsring 46 (dort als Abschlußscheibe bezeichnet) kreisförmig geschlossen ist und deshalb in peripherer Richtung beweglich sein darf, ohne dass dies den Lagerbetrieb stört, sind erfindungsgemäss die Dichtungsringe 146 teilringförmig d.h. offen. Es besteht nach wie vor die Notwendigkeit, den Dichtungsringen 146 radiales Spiel zu gestatten, um ihre Anpassung an veränderte Lagergeometrie bei Fluchtverlust zwischen Welle 178 und Käfig 112 zu ermöglichen. Es besteht aber gleichzeitig die Notwendigkeit, eine Verdrehung der Dichtungsringe 146 zu Vermeiden, da diese Dichtungsringe 146 im Fall einer Verdrehungsmöglichkeit über die eine oder andere Endfläche 186 des Käfigs (siehe Figur 22) hervortreten bzw. hinter diese zurücktreten könnten.

Um den Dichtungsring 146 in radialer Richtung beweglich zu lassen, ihn in peripherer Richtung aber festzulegen, ist eine Ausbildung vorgesehen, wie sie in Figuren 23 u.24 im Detail dargestellt ist. Über der axialgerichteten Fläche 184a er heben sich Nocken 188, die auch in Figuren 22 und 23 erkennbar sind. Diese Nocken 188 durchsetzen Durchbrechungen 190, wie aus Figuren 23 und 24 zu ersehen. Dabei haben die Durchbrechungen 190 ein radiales Übermaß gegenüber der Radialbreite der Nocken 188, so dass die Dichtungsringe 146 nach wie vor ein radiales Spiel besitzen. Dabei ist zu beachten, dass gemäss Figur 22 die Nocken 188 lediglich in den Endbereichen des Dichtungsrings 146, also nahe den Stützlagern 180 der Figur 20, angebracht sind. Weiter ist zu beachten, dass die Höhe der Nocken 188 gegenüber der axial gerichteten Fläche 184a des Käfigs 112 grösser ist als die axiale Stärke des jeweiligen Grundkörpers 146a. Die Fläche 144a, also die Innenseite des Topfbodens 144b des topfförmigen Endrings 144 liegt gegen die Endfläche 188a des jeweiligen Nockens 188 an und ist dort mit dem Käfig verschraubt. Die Verschraubung erfolgt mittels einer Senkschraube 192, die in den Nocken 188 eingeschraubt ist. Wegen des Übermaßes der axialen Höhe des Nockens 188 gegenüber der axialen Dicke des Grundkörpers 146 wird auch bei straffem Anziehen der Senkschraube 192 der Grundkörper 144a nicht zwischen den Flächen 184a und 144a eingeklemmt. Auch insoweit bleibt also das radiale Spiel des Dichtungsrings 146 erhalten. Gemäß Figur 24 läßt sich auch gut erkennen, daß die Ringwand 144c in die Ausdrehungen 140 der Laufplatten 114 eingreift und an der angeschrägten Außenumfangsfläche 187 des Käfigs 112 anliegt, so daß die Laufplatten 114 in dem Käfig axial und radial gehalten sind. Es ist zu bemerken, daß die periphere Festlegung der Ringdichtungen auch durch Vorsprünge 189 der Ringdichtungen 146 gegen die Endleisten 184c (Figur 23) erfolgen kann. Dann bräuchte man die Nocken 188 trotzdem zur Befestigung der Endringe 144. Die Nocken 188 könnten dann aber peripheres Spiel gegenüber den Durchbrechungen 190 neben dem weiterhin notwendigen Radialspiel besitzen.

Mit den Ringdichtungen 146 allein ist das Dichtungsproblem noch nicht vollständig gelöst. Wie aus den Figuren 20 bis 23 sowie 26 und 27 ersichtlich, sind im Bereich der Spaltbegrenzungsflächen 186 in dem Käfig 112 auch Längsdichtungsleisten 194 mit einem Wurzelteil 194a und einem an der Welle 178 anliegenden Zungenteil 194b vorgesehen.

Der Wurzelteil 194a ist in einer axial verlaufenden und radial einwärts offenen Nut 196 des Käfigs 112 nahe dessen jeweiliger Spaltbegrenzungsfläche 186 eingesetzt. Die Nuten 196 erstrecken sich jeweils bis zu den axial gerichteten Flächen 184a und sind in ihren Endabschnitten e peripher erweitert, so daß Stützschultern 198 gebildet sind (Figur 26). Die Wurzelteile 194a der Längsdichtungsleisten 194 weisen in den axialen Endbereichen peripher vorspringende Vorsprünge 200 auf, die sich gegen die Stützschultern 198 anlegen. Die Längsdichtungsleisten 194 besitzen Fortsätze 202 gleichbleibenden Profils mit Wurzelteil 194a und Zungenteil 194b, welche über die Vorsprünge 200 hinaus axial in Richtung auf die Bodenwand 144b des Endrings 144 in die Ringausnehmung 144 hinein vorstehen, so daß, wie in Figur 23 dargestellt, der Dichtungsring 146 an dem Fortsatz 202 zur Anlage kommt. Die in peripherer Richtung weisenden Endflächen 146c sind an das Profil der Dichtleisten 194 angepaßt. Durch das gegenseitige Anliegen der Fortsätze 202 und der Dichtungsringe 146 im Bereich der Ausnehmung 184 ist der Zwischenraum zwischen der Welle 178 und dem Käfig 112 vollständig abgedichtet.

Die Figur 27 lässt die Längsdichtungsleiste 194 vor der Montage erkennen. Axial ausserhalb der Vorsprünge 200 sind an den beiden Enden einer Längsdichtungsleiste 194 Griffelemente 204 angebracht, die es bei der Montage der Längsdichtungsleisten 194 ermöglichen, deren zwischen den Vorsprüngen 200 gelegene Abschnitte so zu dehnen, dass die Vorsprünge 200 über die Schulterflächen 198 vorgeschoben und auf diesen aufgelagert werden können. Nach erfolgter Montage werden die Griffelemente 204 ausserhalb der Fortsätze 202 unter Belassung der Fortsätze 202 abgetrennt.

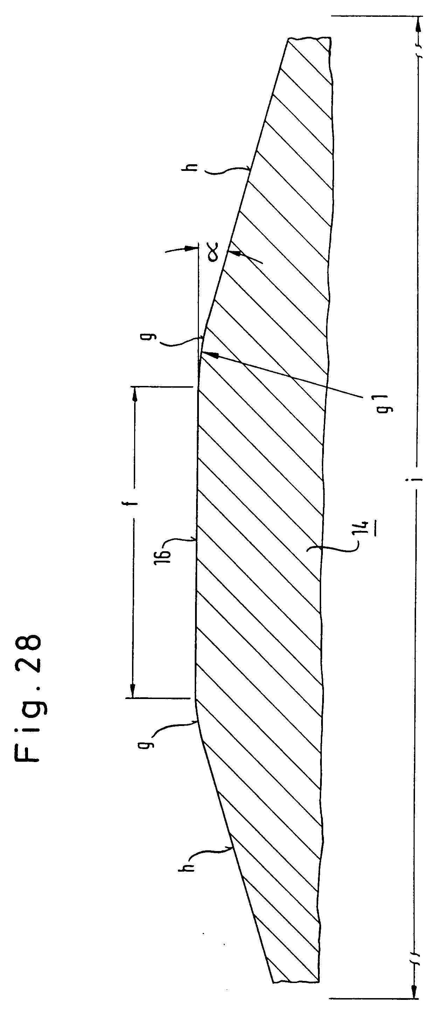

In Figur 28 erkennt man eine Laufplatte 14 wieder, deren Aussenfläche 16 in Figur 6 bereits schematisch angedeutet worden ist. Die Aussenfläche 16 weist einen mittleren geradlinig verlaufenden Längsabschnitt f auf, an den sich über Übergangsrundungen g mit einem Krümmungsradius gl jeweils ein axialer Längsabschnitt h anschliesst, der ebenfalls geradlinig ist. Der Längsabschnitt h schliesst mit dem Längsabschnitt f einen Winkel α von 35 Winkelminuten ein. Die Gesamtlänge der tragenden Kugelreihe ist mit i bezeichnet. Bezüglich der Grössenverhältnisse gilt folgendes:

Die Länge i der Tragkugelreihe beträgt ca. 100 % bis ca. 200 %, vorzugsweise ca. 130 % bis ca. 180 % des Durchmessers der Welle 178; die Länge des mittleren Längsabschnitts f beträgt ca. 2 % bis ca. 15 %, Vorzugsweise ca. 5 % bis ca. 10 % des Durchmessers der Welle 178; der Krümmungsradius gl der Übergangsrundung g beträgt mehr als ca. 100 %, vorzugsweise mehr als ca. 150 % und beispielsweise 167 % bis 300 % des Durchmessers der Welle 178. Die Winkelneigung α beträgt ca. 25 bis 45 Winkelminuten, im Beispielsfall ca. 35 Winkelminuten.

Es hat sich gezeigt, dass bei Einhaltung der genannten Maße noch eine gewisse Kipp- oder Schaukelfähigkeit der Laufplatten 14 gewährleistet ist, andererseits aber im Normalbetrieb durch die Geradlinigkeit im mittleren Längsbereich f die Flächenpressung gegenüber einer umschliessenden Lagerbohrung soweit reduziert ist, dass der Verschleiß klein bleibt. Es hat sich weiter gezeigt, dass bei Einhaltung der angegebenen Maße im Bereich der bei Fluchtverlust zwischen Wellenachse und Käfigachse zu erwartenden Kippbewegungen die Annäherung diametral einander gegenüberliegender Laufplatten 14 innerhalb akzeptabler Grenzen bleibt und damit auch der Druck, den die Kugeln gegen die Welle 178 einerseits und gegen die Laufplatten 14 andererseits ausüben. Die Ausführungsform der Laufplatten nach Figur 28 ist bei allen Ausführungsformen des Linearkugellagers wie vorstehend beschrieben und darüber hinaus anwendbar.

Es ist zu beachten, dass die Laufplatten an ihrer Aussenfläche 16, wie in Figur 2 dargestellt, entsprechend der Innenumfangsfläche einer aufnehmenden Lagergehäusebohrung gerundet sind, so dass eine flächige Anlage der Laufplatten im Bereich des mittleren Längsabschnitts f an der Lagergehäusebohrung gewährleistet ist.

## Patentansprüche

1. Verfahren zum Einbau einer Längsdichtungsleiste (194) in eine mit Längsspalt (186-186) ausgeführte, eine Längsführungswelle (178) mit Stützteil (180) nur teilweise umfassende Linearkugelbüchse (10) mit käfiggeführten endlosen Kugelschleifen (22, 24, 28), bei dem die Längsdichtungsleiste (194) an der Linearkugelbüchse (10) so befestigt wird, daß sie an der Längsführungswelle (178) in deren Längsrichtung dichtend anliegt,
dadurch gekennzeichnet,
daß die an ihren Enden mit Vorsprüngen (200) ausgeführte Längsdichtungsleiste (194) unter Längsspannung gesetzt und mit den Vorsprüngen (200) an Stützschultern (198) der Linearkugelbüchse (10) unter Erhaltung einer Vorspannung zur Anlage gebracht wird.

2. Verfahren nach Anspruch 1,
dadurch gekennzeichnet,
daß die Langsdichtungsleiste (194) zur Aufbringung der Längsspanung axial außerhalb der Vorsprünge (200) mit Griffelementen (204) versehen wird.

3. Verfahren nach Anspruch 2,
dadurch gekennzeichnet,
daß die Griffelemente (204) nach Einbau der Längsdichtungsleiste (194) abgetrennt werden.

4. Verfahren nach einem der Ansprüche 1 bis 3,
dadurch gekennzeichnet,
daß die Vorsprünge (200) der Längsdichtungsleiste (194) an Stützschultern (198) angelegt werden, welche durch jeweils eine Ausnehmung im Käfig (112) der Linearkugelbüchse (10) gebildet sind.

5. Verfahren nach Anspruch 4,
dadurch gekennzeichnet,
daß die Stützschultern (198) angrenzend an eine axial gerichtete Begrenzungsfläche (184a) einer eine Teilringdichtung (146) aufnehmenden Teilringnut (184) des Käfigs (112) bereitgestellt werden.

6. Verfahren nach Anspruch 5,
dadurch gekennzeichnet,
daß eine Längsdichtungsleiste (194) verwendet wird, welche über den jeweiligen Vorsprung (200) hinaus fortgesetzte Fortsätze (202) besitzt und daß diese Fortsätze (202) so angebracht werden, daß sie in die Teilringnut (184) hineinragen und die jeweilige Teilringdichtung (146) mit peripher gerichteten Endflächen (146c) jeweils an einem Fortsatz (202) anliegt.

7. Verfahren nach einem der Ansprüche 1 bis 6,
gekennzeichnet durch die Verwendung einer
Längsdichtungsleiste (194) mit einem Wurzelteil (194a) und einem Zungenteil (194b), wobei der Wurzelteil (194a) in einer Längsnut (196) des Käfigs (112) aufgenommen wird und der Zungenteil (194b) zur Anlage an der Führungswelle bestimmt ist.

8. Verfahren nach Anspruch 7,
dadurch gekennzeichnet,
daß der Wurzelteil (194a) unverklebt von einer Längsnut (196) des Käfigs (112) aufgenommen wird.

9. Längsdichtungsleiste zur Verwendung im Rahmen des Verfahrensnach einem der Ansprüche 1 bis 8,
dadurch gekennzeichnet,
daß sie an ihren Enden jeweils axial außerhalb der Vorsprünge (200) Griffelemente (204) aufweist, welche nach erfolgtem Einbau der Längsdichtungsleiste (194) an die Linearkugelbüchse (10) abtrennbar sind.

## Claims

1. A method of installing a longitudinal sealing strip (194) in a linear ball box (10) which is designed to have longitudinal clearance (186-186) and which only partly embraces a longitudinal guide shaft (178) with a support member (180), said linear ball box (10) having endless ball loops (22, 24, 28) guided in cages, wherein the longitudinal sealing strip (194) is so secured to the linear ball box (10) that it abuts fluidtightly against the longitudinal guide shaft (178) in its longitudinal direction,
characterised in that the longitudinal sealing strip (194) formed with projections (200) at its ends is inserted under longitudinal tension and is applied with the projections (200) against support shoulders (198) of the linear ball box (10), while maintaining a preloading.

2. A method according to Claim 1, characterised in that the longitudinal sealing strip (194) is provided with grip members (204) for applying the longitudinal tension axially outside the projections (200).

3. A method according to Claim 2, characterised in that the grip members (204) are removed after installation of the longitudinal sealing strip (194).

4. A method according to any one of Claims 1 to 3, characterised in that the projections (200) of the longitudinal sealing strip (194) are applied against support shoulders (198) which are formed by a respective recess in the cage (112) of the linear ball box (10).

5. A method according to Claim 4, characterised in that the support shoulders (198) are provided adjoining an axially directed boundary surface (184a) of a partial annular groove (184) of the cage (112) accommodating a partial annular seal (146).

6. A method according to Claim 5, characterised in that a longitudinal sealing strip (194) is used which has extensions (202) extending beyond the respective projection (200), and in that these extensions (202) are arranged so that they project into the partial annular groove (184) and the respective partial annular seal (146) is applied with peripherally directed end faces (146c) against a respective extension (202).

7. A method according to any one of Claims 1 to 6, characterised by the use of a longitudinal sealing strip (194) with a root portion (194a) and a tongue portion (194b), wherein the root portion (194a) is accommodated in a longitudinal groove (196) of the cage (112) and the tongue portion (194b) is intended to be applied against the guide shaft.

8. A method according to Claim 7, characterised in that the root portion (194a) is accommodated without adhesion by a longitudinal groove (196) of the cage (112).

9. A longitudinal sealing strip for use within the scope of the method according to any one of Claims 1 to 8, characterized in that at its ends in each case axially outside the projections (200) it has grip members (204) which can be removed after the longitudinal sealing strip (194) has been installed in the linear ball box (10).

## Revendications

1. Procédé de mise en place d'une bande d'étanchéité longitudinale (194) dans un palier à billes linéaire (10), réalisé avec une fente longitudinale (186 - 186), entourant seulement en partie un arbre de guidage longitudinal (178) avec pièce d'appui (180) et comportant des rangées de billes (22, 24, 28) sans fin guidées dans une cage, dans lequel la bande d'étanchéité longitudinale (194) est fixée sur le palier à billes linéaire (10) de manière telle, qu'elle s'applique sur l'arbre de guidage longitudinal (178) dans le sens longitudinal de celui-ci, en assurant l'étanchéité,
caractérisé en ce que
la bande d'étanchéité longitudinale (194) réalisée avec des saillies (200) à ses extrémités, est mise sous tension longitudinale et est mise en place sous précontrainte, au moyen des saillies (200) sur des épaulements d'appui (198) du palier à billes linéaire (10).

2. Procédé selon la revendication 1,
caractérisé en ce que
pour appliquer la tension longitudinale axialement à l'extérieur par rapport aux saillies (200), la bande d'étanchéité longitudinale (194) est pourvue d'éléments de préhension (204).

3. Procédé selon la revendication 2,
caractérisé en ce que
les éléments de préhension (204) sont détachés une fois la bande d'étanchéité longitudinale (194) mise en place.

4. Procédé selon l'une des revendications 1 à 3,
caractérisé en ce que
les saillies (200) de la bande d'étanchéité longitudinale (194) sont appliquées contre des épaulements d'appui (198), qui sont formés chacun par un évidement dans la cage (112) du palier à billes linéaire (10).

5. Procédé selon la revendication 4,
caractérisé en ce que
les épaulements d'appui (198) sont prévus adjacents à une surface de limitation (184a), orientée axialement, d'une rainure en anneau partiel (184) de la cage (112) recevant un joint d'étanchéité (146) en anneau partiel.

6. Procédé selon la revendication 5,
caractérisé en ce que,
l'on utilise une bande d'étanchéité longitudinale (194) présentant des prolongements (202) qui s'étendent au-delà de la saillie (200) considérée et en ce que ces prolongements (202) sont prévus de manière telle, qu'ils s'avancent dans la rainure (184) en anneau partiel et en ce que le joint d'étanchéité (146) en anneau partiel considéré prend appui sur un prolongement (202) par des surfaces d'extrémité (146c) orientées dans le sens périphérique.

7. Procédé selon l'une des revendications 1 à 6,
caractérisé par l'utilisation d'une bande d'étanchéité longitudinale (194) qui présente une partie formant base (194a) et une partie formant lèvre (194b), la partie formant base (194a) étant logée dans une rainure longitudinale (196) de la cage (112) et la partie formant lèvre (194b) étant destinée à venir en appui sur l'arbre de guidage.

8. Procédé selon la revendication 7,
caractérisé en ce que
la partie formant base (194a) est logée, sans être collée, dans une rainure longitudinale (196) de la cage (112).

9. Bande d'étanchéité longitudinale destinée à être utilisée dans le cadre du procédé selon l'une des revendications 1 à 8,
caractérisée en ce qu'
elle présente à ses extrémités chaque fois extérieurement par rapport aux saillies (200) des éléments de préhension (204), qui sont détachables, une fois réalisée la mise en place de la bande d'étanchéité longitudinale (194) sur le palier à billes linéaire.
